# EUROPEAN PATENT APPLICATION

(11) **EP 2 233 870 A1**
(43) Date of publication of application: **29.09.2010**
(21) Application number: 09250654.2
(22) Date of filing: 09.03.2009
(51) Int. Cl.: F25J 3/02, C01B 3/50, F25J 3/06, F25J 1/02

(54) **Separation of carbon dioxide and hydrogen**

(71) Applicant: BP Alternative Energy International Limited, Sunbury on Thames TW16 7BP (GB)
(72) Inventor: The designation of the inventor has not yet been filed
(74) Representative: Collins, Frances Mary

(57) **Abstract**

A process for removing carbon dioxide from a synthesis gas feed stream in a cryogenic separation plant that comprises either a single cryogenic separation stage or at least two cryogenic separation stages arranged in series, with the stages in the series being designated stage 1 through stage N, the letter N representing the number of stages in the series, the single stage or each stage of the series comprising the steps of (a) condensing carbon dioxide from the synthesis gas by cooling the synthesis gas by non-contact heat exchange (E-102,E-103,E-104) with an external refrigerant (propane, ethane) to produce liquefied carbon dioxide, and (b) separating the liquefied carbon dioxide from the synthesis gas, with the single separation stage discharging a liquefied carbon dioxide product stream and a hydrogen enriched synthesis gas stream or, with each of the stages in the series cooling the synthesis gas to a successively lower temperature as the synthesis gas progresses from stage 1 to stage N, thereby separately removing a liquefied carbon dioxide product stream (14) from each of the stages, with stage N discharging a hydrogen enriched synthesis gas vapour stream (155), characterized in that:
(i) the synthesis gas feed stream comprises 40 to 65 mole % hydrogen and is fed to the single stage or the first stage of the series at a pressure in the range of 46 to 76 bar absolute;
(ii) the single stage or stage N of the series is operated at a temperature in the range of -53 to -48°C and a pressure in the range of 44 to 74 bar absolute such that the single stage or the combined stages of the series remove 70 to 80% of the total moles of carbon dioxide in the synthesis gas feed stream; and
(iii) the liquefied CO₂ product stream (16) removed from the single stage or the liquefied C02 product streams removed from each stage of the series are sequestrated.

## Description

This invention relates to the partial recovery of carbon dioxide from a synthesis gas stream comprising hydrogen and carbon dioxide thereby generating a carbon dioxide stream that may be used in a chemical process, or may be sequestered or used for enhanced oil recovery before being ultimately sequestered, and a hydrogen stream that may be used as fuel for a power plant thereby generating electricity or as fuel for a burner, furnace or boiler or as a refinery feed stream for upgrading of one or more refinery streams or as a hydrogen feed to a chemical process.

US 2007/0221541 relates to a multi-stage autorefrigeration process where the first two autorefrigeration stages combined remove about 76% of the total moles of acid gases and about the same percentage of moles of CO₂ in the starting syngas. It is said that if the sulfur had been removed from the syngas initially during syngas production, a removal percentage of 76% could quite possibly be, depending on the future of environmental law, adequate for sequestration of CO₂. In such a case, no additional autorefrigeration stages would be needed. However, a disadvantage of the process of US 2007/0221541 is that the liquefied acid gases that are separated in the two autorefrigeration stages are evaporated to provide the cooling of the syngas. Accordingly, it would be necessary to pressurize the acid gas product streams from the stages before they can be sequestered.

It has now been found that at least 70% of the moles of CO₂ can be removed from the starting synthesis gas using a refrigeration process comprising at least one refrigeration stage that employs an external refrigerant by operating the refrigeration stage(s) under optimum conditions of temperature and pressure.

Thus, the present invention provides a process for removing carbon dioxide from a synthesis gas feed stream in a cryogenic separation plant that comprises either a single cryogenic separation stage or at least two cryogenic separation stages arranged in series, with the stages in the series being designated stage 1 through stage N, the letter N representing the number of stages in the series, the single stage or each stage of the series comprising the steps of (a) condensing carbon dioxide from the synthesis gas by cooling the synthesis gas by non-contact heat exchange with an external refrigerant to produce liquefied carbon dioxide, and (b) separating the liquefied carbon dioxide from the synthesis gas, with the single separation stage discharging a liquefied carbon dioxide product stream and a hydrogen enriched synthesis gas stream or, with each of the stages in the series cooling the synthesis gas to a successively lower temperature as the synthesis gas progresses from stage 1 to stage N, thereby separately removing a liquefied carbon dioxide product stream from each of the stages, with stage N discharging a hydrogen enriched synthesis gas vapour stream, **characterized in that:**
(i) the synthesis gas feed stream comprises 40 to 65 mole % hydrogen and is fed to the single stage or the first stage of the series at a pressure in the range of 46 to 76 bar absolute;
(ii) the single stage or stage N of the series is operated at a temperature in the range of -53 to -48°C and a pressure in the range of 44 to 74 bar absolute such that the single stage or the combined stages of the series remove 70 to 80% of the total moles of carbon dioxide in the synthesis gas feed stream; and
(iii) the liquefied CO₂ product stream(s) removed from the stage(s) of the cryogenic separation plant is sequestrated and/or used in a chemical process.

Preferably , the refrigeration process is a multi-stage refrigeration process having at least two refrigeration stages arranged in series that each employ an external refrigerant. Thus, in a preferred embodiment of the present invention there is provided a process for removing carbon dioxide from a synthesis gas feed stream in a cryogenic separation plant that comprises at least two cryogenic separation stages arranged in series, with the stages in the series being designated stage 1 through stage N, the letter N representing the number of stages in the series, each stage comprising the steps of (a) condensing carbon dioxide from the synthesis gas by cooling the synthesis gas by non-contact heat exchange with an external refrigerant to produce liquefied carbon dioxide, and (b) separating the liquefied carbon dioxide from the synthesis gas, with each of the stages in the series cooling the synthesis gas to a successively lower temperature as the synthesis gas progresses from stage 1 to stage N, thereby separately removing a liquefied carbon dioxide product stream from each of the stages, with stage N discharging a hydrogen enriched synthesis gas vapour stream, **characterized in that:**
(i) the synthesis gas feed stream comprises 40 to 65 mole % hydrogen and is fed to the first stage of the cryogenic separation plant at a pressure in the range of 46 to 76 bar absolute;
(ii) stage N of the series is operated at a temperature in the range of -53 to -48°C and a pressure in the range of 44 to 74 bar absolute such that the combined stages of the series remove 70 to 80% of the total moles of carbon dioxide in the synthesis gas feed stream; and
(iii) the liquefied CO₂ product streams removed from each stage of the series are sequestrated and/or used in a chemical process.

The term "synthesis gas feed stream" used herein refers to a shifted synthesis gas stream comprising hydrogen and carbon dioxide. The synthesis gas feed stream may also comprise carbon monoxide and hydrogen sulfide.

Where the refrigeration process is a multi-stage refrigeration process, preferably, the liquefied CO₂ product streams that are removed from each stage of the series are combined prior to being sequestrated.

Preferably, 75 to 80% of the total moles of carbon dioxide in the synthesis gas feed stream is separated in the cryogenic separation plant. Thus, the process of the present invention removes a substantial amount of CO₂ from the synthesis gas feed stream. Typically, the hydrogen enriched synthesis gas stream is fed to the combustor of a gas turbine of a power plant. Accordingly, an advantage of the present invention is that significantly less CO₂ is released to the atmosphere than if the solid fuel or gaseous hydrocarbon feedstock that is used to form the synthesis gas was used directly as fuel for the power plant. A further advantage of the process of the present invention is that the hydrogen enriched synthesis gas stream may be obtained at a pressure that is at or above the minimum fuel gas feed pressure (inlet pressure) for the combustor(s) of the gas turbine(s) of the power plant thereby eliminating the need for compressors to compress the fuel gas.

The synthesis gas feed stream may be generated from a solid fuel such as petroleum coke or coal in a gasifier or from a gaseous hydrocarbon feedstock in a reformer. The synthesis gas stream from the gasifier or reformer contains high amounts of carbon monoxide. Accordingly, the synthesis gas stream is typically treated in a shift converter unit such that at least a portion, preferably, substantially all of the carbon monoxide contained in the synthesis gas stream is converted to carbon dioxide over a shift catalyst according to the water gas shift reaction (WGSR):

CO +H₂O → CO₂ + H_{2.}

Where a portion of the carbon monoxide remains in the shifted synthesis gas, the majority of this carbon monoxide will be retained in the hydrogen enriched synthesis gas stream and will be converted into carbon dioxide when the hydrogen enriched synthesis gas stream is used as a fuel.

The shift converter unit may be a single shift reactor containing a shift catalyst. However, it is preferred that the shift converter unit comprises a high temperature shift reactor containing a high temperature shift catalyst and a low temperature shift reactor containing a low temperature shift catalyst. The water gas shift reaction is exothermic and results in a significant temperature rise across the shift converter unit. Accordingly, the shift converter unit may be cooled by continuously removing a portion of the shifted synthesis gas stream and cooling this stream by heat exchange with one or more process streams, for example against boiler feed water or against steam (for the generation of superheated steam).

The synthesis gas feed stream typically comprises primarily hydrogen, carbon dioxide and steam and minor amounts of carbon monoxide and methane. Where the synthesis gas feed stream is derived from a gasifier, the synthesis gas feed stream will also comprise hydrogen sulfide (H₂S) that is formed by reaction of COS with steam in the shift converter unit. A further advantage of the process of the present invention is that it allows the co-capture of the H₂S in addition to capture of carbon dioxide (CO₂). Thus, H₂S will condense from the synthesis gas in the single stage or each of the stages of the series and will be removed from the single stage or each of the stages of the series in the liquefied carbon dioxide product stream(s). By operating the single stage or the final stage of the series (stage N) at a temperature in the range of -53 to -48°C and a pressure in the range of 55 to 59 bar absolute, the single stage or the combined stages of the series will also remove 80 to 90% of the total moles of hydrogen sulfide from the synthesis gas feed stream.

The synthesis gas feed stream is cooled upstream of the cryogenic separation plant, for example, to a temperature in the range of 20 to 50°C, for example, about 40°C to condense out a condensate (predominantly comprised of water). The condensate is then separated from the cooled shifted synthesis gas stream, for example, in a condensate drum. Typically, the condensate is cooled against boiler feed water and/or utility cooling water.

After removal of any condensate, the synthesis gas feed stream is dried prior to being passed to the CO₂ condensation plant, as any moisture in the synthesis gas feed stream will freeze and potentially cause blockages in the plant. The synthesis gas feed stream may be dried by being passed through a molecular sieve bed or an absorption tower that employs triethylene glycol to selectively absorb the water, preferably a molecular sieve bed. Preferably, the dried synthesis gas feed stream has a water content of less than 1 ppm (on a molar basis).

Preferably, the dried synthesis gas feed stream is then passed to a pre-cooling heat exchanger of the CO₂ condensation plant where the synthesis gas feed stream is pre-cooled against a cold stream (for example, a cold process stream such as a liquid CO₂ product stream or a cold H₂ enriched synthesis gas vapour stream). Preferably, the pre-cooling heat exchanger is a multichannel heat exchanger, for example, a plate fin heat exchanger or a printed circuit heat exchanger, with the dried synthesis gas feed stream being passed through at least one channel of the multichannel heat exchanger and a plurality of cold process streams being passed through further channels of the multichannel heat exchanger such that the dried synthesis gas stream is pre-cooled against the cold process streams. Alternatively, the dried synthesis gas feed stream may be pre-cooled against a plurality of cold process streams using at least two, preferably, 2 to 8, for example, 4 shell and tube heat exchangers. These shell and tube heat exchangers may be arranged in series and/or in parallel. Where the shell and tube heat exchangers are arranged in parallel, the synthesis gas feed stream is divided to form a plurality of sub-streams that are fed to the heat exchangers and the cooled sub-streams that exit the heat exchangers are subsequently recombined. It is also envisaged that the dried synthesis gas stream may be pre-cooled using a combination of a multichannel heat exchanger and one or more shell and tube heat exchangers.

As discussed below, the hydrogen enriched synthesis gas vapour stream may be subjected to isentropic expansion in a turboexpander (resulting in cooling of the hydrogen enriched synthesis gas vapour stream) after being used to pre-cool the dried synthesis gas feed stream. Cooling of the expanded hydrogen enriched synthesis gas vapour stream allows the dried synthesis gas feed stream to be pre-cooled to a temperature in the range of -15 to -35°C, for example, about -23°C. Where the hydrogen enriched synthesis gas vapour stream is not subjected to isentropic expansion before being used to pre-cool the dried synthesis gas stream, the synthesis gas feed stream may typically only be cooled to a temperature in the range of 0 to -15°C, for example, about -10°C. Depending upon the composition of the synthesis gas feed stream and the amount of pre-cooling, the pre-cooled stream may remain in a vapour state or may be cooled to below its dew point thereby becoming two phase.

The synthesis gas feed stream is then passed through the cryogenic separation stage(s) of the cryogenic separation plant. The single cryogenic separation stage or each cryogenic separation stage of the series comprises a heat exchanger that employs an external refrigerant and a gas-liquid separation vessel. Preferably, the cryogenic separation plant comprises 1 to 5, more preferably, 2 to 4, for example, 3 cryogenic separation stages arranged in series.

By "external refrigerant" is meant a refrigerant that is formed in an external refrigeration circuit. Accordingly, liquid CO₂ that is formed in the process of the present invention is not regarded as an external refrigerant. Suitable external refrigerants that may be used as refrigerant in the heat exchanger(s) of the separation stages(s) include propane, ethane, ethylene, ammonia, hydrochlorofluorocarbons (HCFC's) and mixed refrigerants. Typical mixed refrigerants comprise at least two refrigerants selected from the group consisting of butanes, propanes, ethane, and ethylene. These refrigerants may be cooled to the desired refrigeration temperature in external refrigerant circuits using any method known to the person skilled in the art including methods known in the production of liquefied natural gas (LNG) or natural gas liquids (NGLs).

The operating temperature of each cryogenic separation stage will depend on the number of cryogenic separation stages and the desired carbon dioxide capture level. There is a limit on the lowest temperature in the final cryogenic separation stage, as the temperature must be maintained above a value where solid CO₂ will form. This typically occurs at a temperature of less than -55°C at pressures of less than 300 barg (the triple point for pure CO₂ is at 5.18 bar and at a temperature of -56.4°C) although the presence of H₂S may depress this freezing point.

There is minimal pressure drop across the stages of the cryogenic separation plant. Typically, the pressure drop across the single stage or the series of stages of the cryogenic separation plant is in the range of 2 to 10 bar, preferably, 2 to 5 bar, in particular, 2 to 3 bar. Preferably, the pressure drop across the single stage or across each stage of the series is about 1 bar. Thus, where the plant comprises at least two stages arranged in series, it may be operated with the stages at substantially the same pressure. Higher pressure drops across the cryogenic separation stage(s) may be tolerated (for example, pressure drops in the range of 10 to 30 bar, preferably 10 to 20 bar) provided that the single separation stage or final cryogenic separation stage of the series is operated at a pressure in the range of 45 to 59 bar absolute, preferably, 56 to 58 bar absolute, for example, 57 bar absolute. An advantage of operating the single or final cryogenic separation stage of the series at a pressure in the range of 55 to 59 bar absolute is that the H₂ enriched synthesis gas stream that is discharged from the separator vessel of the single separation stage or from the separator vessel of the final stage (stage N) of the series is at or above the minimum feed gas pressure (minimum inlet pressure) for the combustor(s) of the gas turbine(s) of the power plant (see below).

The process of the present invention will now be described with respect to a CO₂ condensation plant that comprises three cryogenic separation stages arranged in series. The synthesis gas feed stream is pre-cooled against one or more cold process streams (for example, a hydrogen enriched synthesis gas vapour stream and/or a liquefied CO₂ stream) before being passed through the heat exchanger of the first cryogenic separation stage where the synthesis gas is cooled to a temperature in the range of -32 to -28°C against an external refrigerant thereby forming a two phase stream comprising a liquid phase (comprising liquid CO₂) and a vapour phase comprising H₂ and CO₂ (hydrogen enriched synthesis gas). The two phase stream is then passed to the gas-liquid separator vessel of the first cryogenic separation stage where the liquid phase is separated from the vapour phase. A hydrogen enriched synthesis gas vapour stream and a liquid CO₂ stream are withdrawn from the separator vessel, preferably, from at or near the top and bottom respectively of the separator vessel. The H₂ enriched synthesis gas vapour stream is then used as feed to the second cryogenic separation stage where it is passed through a further heat exchanger and is cooled to a temperature in the range of -43 to -39°C against a further external refrigerant. The resulting two phase stream is passed to the gas-liquid separator vessel of the second cryogenic separation stage for separation of the phases. A vapour stream that is further enriched in H₂ and a liquid CO₂ stream are withdrawn from the separator vessel, preferably, from at or near the top and bottom respectively of the separator vessel. The hydrogen enriched synthesis gas vapour stream discharged from the second cryogenic separation stage is then used as feed to the third cryogenic separation stage where it is passed through a further heat exchanger and is cooled to a temperature in the range of -53 to -48°C against a further external refrigerant. The resulting two phase stream is passed to the gas-liquid separator vessel of the third cryogenic separation stage for separation of the phases. A vapour stream that is further enriched in H₂ and a liquid CO₂ stream are withdrawn from the separator vessel, preferably, from at or near the top and bottom respectively of the separator vessel. Preferably, the synthesis gas feed stream is fed to the first cryogenic separation stage at as high a pressure as possible, which will be dependent upon the source of the gas. Typically, the synthesis gas feed stream is fed to the first cryogenic separation stage at a pressure of at least 50 bar absolute, preferably, 55 to 75 bar absolute, for example, 60 to 70 bar absolute. If desired, the feed to the first cryogenic separation stage may be compressed to higher pressure. Typically, the pressure drop across the three cryogenic separation stages is minimized such that the third cryogenic separation stage is operated at a pressure that is less than 5 bar below the pressure of the first cryogenic separation stage. For example, where the synthesis gas feed stream is fed to the first cryogenic separation stage at a pressure of 60 bar absolute, the third cryogenic separation stage is typically operating at a pressure in the range of 55 to 58 bar absolute.

Typically, the hydrogen enriched synthesis vapour stream (non-condensable stream) discharged from the final cryogenic separation stage (Stage N) of the cryogenic separation plant comprises at least 70 mole % hydrogen, preferably, at least 80 mole % hydrogen, the remainder being mostly carbon dioxide. Typically, the amount of CO₂ contained in the H₂ enriched synthesis gas vapour stream that is discharged from the final cryogenic separation stage (Stage N) of the cryogenic separation plant is less than 30 mole % CO₂, preferably, less than 25 mole % CO₂. This hydrogen enriched synthesis gas vapour stream may also comprise trace amounts of carbon monoxide (CO) and methane, for example, less than 500 ppm on a molar basis (although higher amounts of CO may be tolerated, for example 2-3 mole% CO). The H₂ enriched synthesis gas vapour stream from the final cryogenic separation stage of the CO₂ condensation plant (Stage N) may be used as a fuel stream for the combustor of a gas turbine that drives an electric generator thereby producing electricity. We should perhaps mention somewhere the amount of H2S that could be present in the shifted synthesis gas?

Typically, the fuel gas feed pressure (inlet pressure) for the combustor of the gas turbine(s) is in the range of 25 to 45 barg, preferably, 28 to 40 barg, in particular, 30 to 35 barg. Typically, the combustor of the gas turbine(s) is operated at a pressure of 15 to 20 bar absolute. Accordingly, the H₂ enriched synthesis gas vapour stream may be obtained above the minimum fuel gas feed pressure for the combustor(s) of the gas turbine(s) so that there is no requirement for a gas compressor to compress the hydrogen enriched synthesis gas stream (fuel gas stream) to the inlet pressure for the combustor(s) of the gas turbine(s). Typically, the H₂ enriched synthesis gas vapour stream may be expanded in at least one turboexpander arranged in series down to the inlet pressure of the combustor(s) of the gas turbine(s). The isentropic expansion of the hydrogen enriched vapour stream in the turboexpander(s) produces work that may be used to drive at least one turbine or an electric motor thereby generating electricity for export or for use within the process (for example, for operating the CO₂ pumps and/or a compressor of an external refrigeration circuit). Generally, the turboexpanders are mounted on a common shaft. Typically, the turboexpanders are operated with substantially the same pressure ratio across each turboexpander, for example, a pressure ratio in the range of 0.88 to 0.66. The H₂ enriched synthesis gas vapour stream is cooled by isentropic expansion in the turboexpander(s) thereby allowing additional pre-cooling of the synthesis gas feed stream. Typically, the H₂ enriched synthesis gas vapour stream that exits the separator of the single cryogenic separation stage or that exits stage N of the series of cryogenic separation stages is passed through a channel of the multichannel heat exchanger in heat exchanger relationship with the synthesis gas feed stream and is then cooled by expansion to lower pressure in a first turboexpander before being fed to a further channel in the multichannel heat exchanger. The hydrogen enriched vapour stream may then be cooled by expansion to a lower pressure in a second turboexpander before being fed to a further channel of the multichannel heat exchanger. Where the H₂ enriched synthesis gas vapour stream is to be used as fuel gas for the combustor of a gas turbine, it should not be reduced in pressure to below the desired fuel gas feed pressure (inlet pressure) for the combustor. However, it is also recognised that the hydrogen enriched synthesis gas vapour stream may be expanded to pressures below the inlet pressure of the combustor of a gas turbine, if the hydrogen enriched synthesis gas vapour stream is to be used for a different purpose, for example, as fuel for a low pressure burner of a fired heater, or as fuel for a reformer or boiler or as a refinery feed stream for upgrading of one or more refinery streams or as a hydrogen feed to a chemical process.

As discussed above, the hydrogen enriched synthesis gas vapour stream may be used as fuel gas for the combustor of the gas turbine(s). It is preferred that the fuel gas contains 35 to 65 mole % hydrogen, more preferably, 45 to 60 mole % hydrogen, for example, 48 to 52 mole % of hydrogen. An advantage of the present invention is that the hydrogen enriched synthesis gas vapour stream that is discharged from the cryogenic separation plant contains CO₂ as a co-component. It may therefore not be necessary to add a diluent such as nitrogen and/or steam to the hydrogen enriched synthesis gas vapour stream in order to meet the fuel specification for the combustor of the gas turbine. Alternatively, the amount of diluent added to the hydrogen enriched synthesis gas vapour stream may be reduced.

The exhaust gas from the gas turbine(s) is passed to a heat recovery and steam generator unit (HRSG) where the exhaust gas may be heat exchanged with various process streams. Optionally, the temperature of the exhaust gas from the gas turbine is increased by providing the HRSG with a post-firing system, for example, a post-firing burner. Suitably, the post-firing burner is fed with a portion of the hydrogen enriched synthesis gas fuel stream which is combusted in the burner using residual oxygen contained in the exhaust gas. Suitably, the exhaust gas is raised in temperature in the post-firing system to a temperature in the range of 500 to 800°C.

Typically, the HRSG generates and superheats steam for use in at least one steam turbine and elsewhere in the process of the present invention. Typically, the HRSG is capable of generating high pressure (HP) steam, medium pressure (MP) steam and low pressure (LP) steam and of superheating these steam streams. The HRSG may also be capable of reheating MP steam that is produced as an exhaust stream from the high pressure stage of a multistage steam turbine. In addition, the HRSG may be used to heat boiler feed water (for example, boiler feed water that is fed to the waste heat boiler of a shift converter unit).

The cooled exhaust gas is discharged from the HRSG to the atmosphere through a stack. Preferably, the stack is provided with a continuous emission monitoring system for monitoring, for example, the NOₓ content of the cooled exhaust gas.

The liquid CO₂ stream(s) that are withdrawn from the separator vessel(s) of the cryogenic separation stage(s) preferably comprises at least 90 mole% CO₂, in particular, at least about 94 mole % CO₂, the remainder being mostly hydrogen with some inerts, for example, nitrogen and/or CO. Where the cryogenic separation plant comprises a plurality of cryogenic separation stages arranged in series, the liquid CO₂ streams that are withdrawn from the stages are preferably combined. The liquid CO₂ stream or combined liquid CO₂ stream is preferably fed to a to a rectification column for removal of residual hydrogen. Typically, the rectification column is a distillation column comprising a plurality of distillation trays, for example, 3 to 5 distillation trays. The liquid CO₂ stream or combined liquid CO₂ stream is fed to an intermediate position in the column while a hydrogen enriched vapour stream is withdrawn from at or near the top of the distillation column and a liquid CO₂ stream having a reduced content of hydrogen is removed from at or near the bottom of the distillation column. Typically, the liquid CO₂ stream that is removed from at or near the bottom of rectification column has a hydrogen content of less than 1% by volume, preferably, less than 0.05% by volume. Preferably, the distillation column is operated with reflux i.e. the hydrogen enriched vapour stream that is withdrawn from at or near the top of the distillation column is cooled to below its dew point against an external refrigerant, for example, propane or ethane, to condense out liquid CO₂ and the condensed liquid CO₂ is returned to the upper part of the column, for example, to the top tray of the column.

The liquid CO₂ stream is then pumped to the desired export pressure, for example, the pipeline delivery pressure. The liquid CO₂ stream may then be transferred by pipeline to a reception facility of an oil field where the stream may be used as an injection fluid in the oil field. If necessary, the liquid CO₂ stream is further pumped to above the pressure of an oil reservoir before being injected down an injection well into the oil reservoir. The injected CO₂ displaces the hydrocarbons contained in the reservoir rock towards a production well for enhanced recovery of hydrocarbons therefrom. If any carbon dioxide is produced from the production well together with the hydrocarbons, the carbon dioxide may be separated from the hydrocarbons for re-injection into the oil reservoir such that the CO₂ is sequestered in the oil reservoir. It is also envisaged that the liquid CO₂ stream may be injected into an aquifer or a depleted oil or gas reservoir for storage therein.

The process of the present invention will now be illustrated by reference to the following Figures.

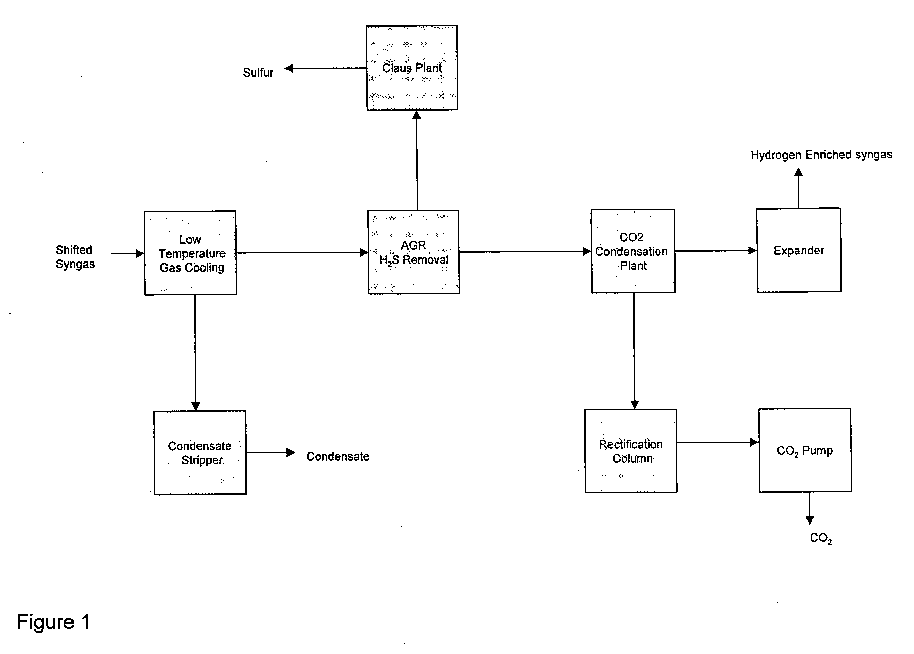

Figure 1 shows a block flow diagram that illustrates the production of a synthesis gas stream comprising hydrogen and carbon dioxide and the separation of a hydrogen enriched synthesis gas stream from a carbon dioxide stream using a cryogenic separation plant.

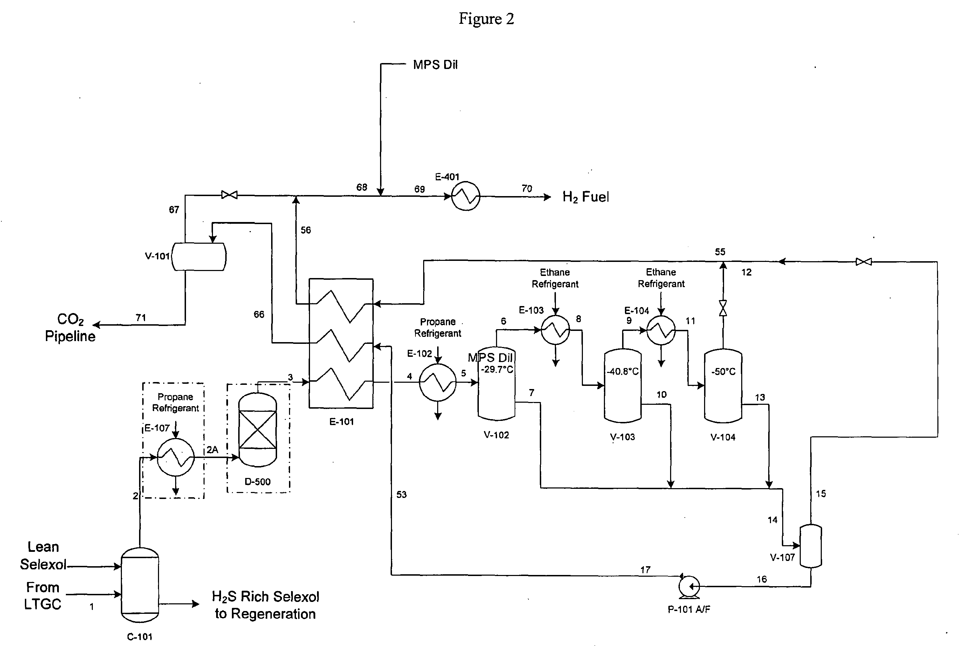

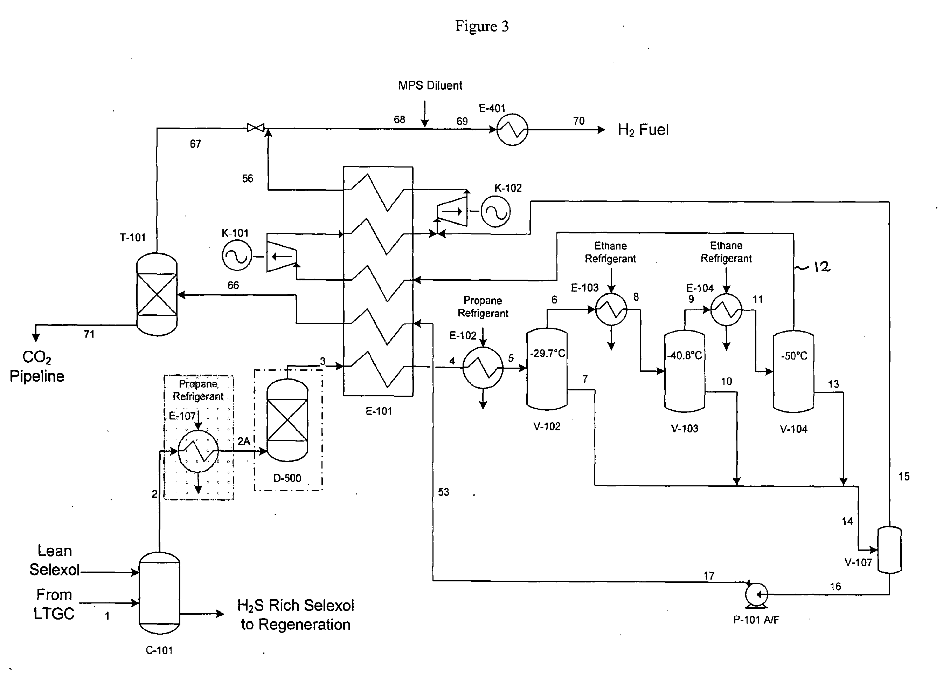

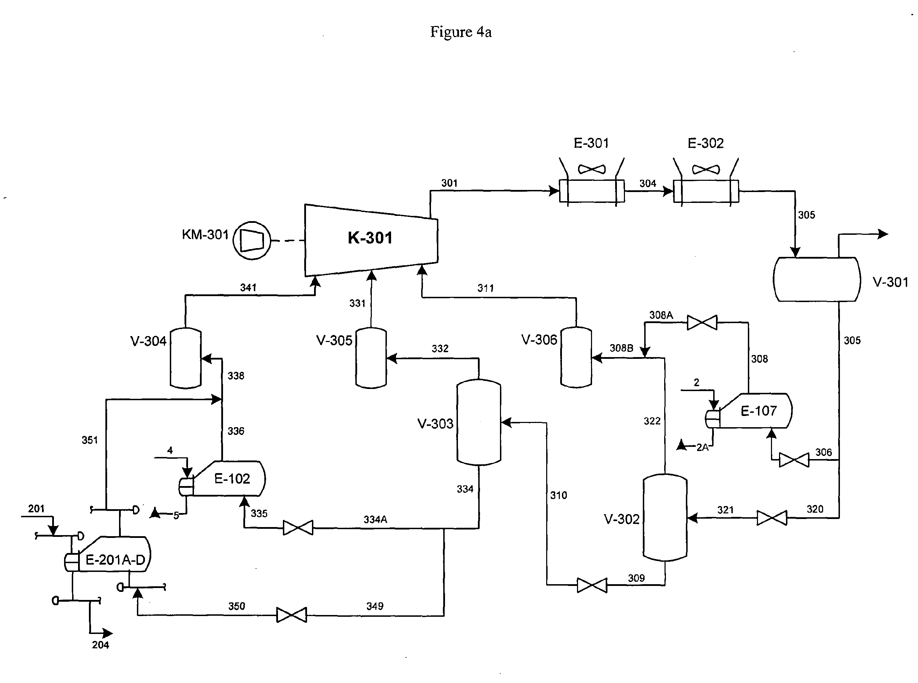

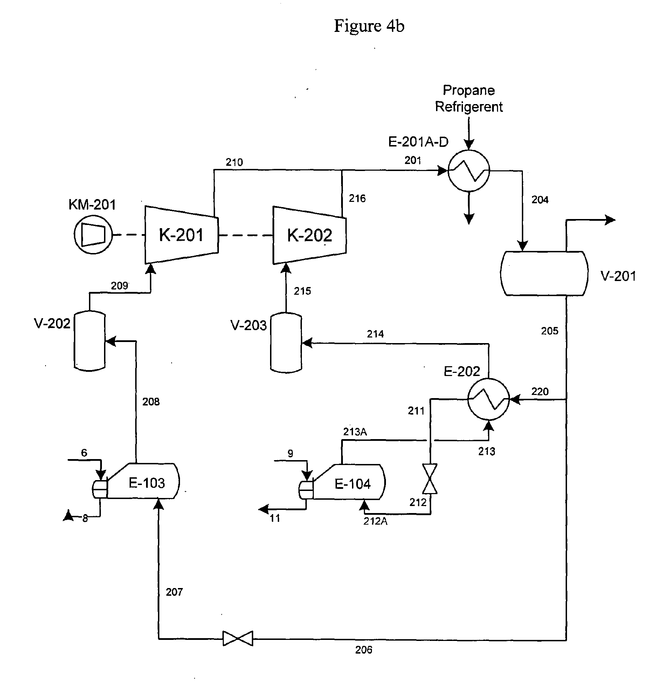

Figure 2 provides a more detailed view a cryogenic separation plant according to the present invention while Figure 3 relates to a cryogenic separation plant according to a preferred embodiment of the present invention. Figures 4a and 4b show the external refrigeration circuits that produce the external refrigerants for the cryogenic separation plants of Figures 2 and 3.

In Figure 1, a shifted synthesis gas stream comprising 30 to 65 mole % H₂, 35 to 70 mole % CO₂, up to 3 mole % of CO, and up to 100 ppm of H₂S, is subjected to Low Temperature Gas Cooling to knock out water contained in the shifted synthesis gas stream. Typically, this is achieved by cooling the shifted synthesis gas stream to a temperature of approximately 30 to 40°C in a heat exchanger against boiler feed water thereby generating steam. Cooling results in condensation of the majority of the water which is separated in a knockout drum. In practice, cooling of the shifted synthesis gas stream generates two steam streams, low pressure (LP) steam and medium pressure (MP) steam. These steam streams may be used in an upstream plant (for example, a gasifier) or sent to a steam turbine for electricity generation. The water that is separated in the knock-out drum will contain trace amounts of CO₂ and other impurities. These impurities are stripped from the condensate in a Condensate Stripper. The remaining condensate (water) is then used as boiler feed water.

The shifted synthesis gas from the Low Temperature Gas Cooling Stage may then sent to an Acid Gas Removal (AGR) plant where the H₂S may be stripped out of the CO₂ enriched stream via the use of a physical or chemical absorbent in an absorption tower. Typically Selexol™ (a mixture of dimethyl ethers of polyethylene glycol) is used as absorbent. The separated H₂S may be passed to a Claus plant for the production of elemental sulphur, or may be converted to sulphuric acid in a sulphuric acid plant. However, where it is desired to co-capture the H₂S, the shifted synthesis gas from the Low Temperature Gas Cooling Stage an AGR plant may be eliminated with the H₂S partitioning into the liquefied CO₂ in the separator vessel(s) of the cryogenic separation stage(s) of the plant. If necessary, the hydrogen enriched synthesis gas vapour stream that is separated from the captured CO₂ and co-captured H₂S is passed through a zinc oxide guard bed to remove any residual H₂S prior the stream being used as a fuel gas. Alternatively, H₂S may be removed from the cold hydrogen enriched synthesis gas vapour stream downstream of the single cryogenic separation stage or stage N of the series, using a chemical absorbent in an absorption tower, for example, Rectisol® (methanol). Typically, an absorption tower that employs Rectisol® as absorbent is operated at a temperature of about -40°C. Accordingly, the hydrogen enriched synthesis gas vapour stream should be passed to the absorption tower, prior to the vapour stream being heated to above -40°C against the dried synthesis gas feed stream.

The synthesis gas feed stream that exits the AGR plant (or by-passes the AGR plant) is then dried, as any moisture in the synthesis gas feed stream will cause freezing and blockages in downstream processing equipment. Viable options for dehydrating the synthesis gas feed stream include passing the gas through a molecular sieve bed. Typically, the water content of the dried synthesis gas feed stream is less than 1 ppm (molar basis).

Once dehydrated, the synthesis gas feed stream is sent at a pressure of 57 bar to a cryogenic separation plant. This cryogenic separation plant typically comprises a multichannel heat exchanger and at least one, preferably, two or more cryogenic separation stages arranged in series. In the multichannel heat exchanger, the synthesis gas feed stream is cooled against one or more cold product streams. However, it is also envisaged that the multichannel heat exchanger may be replaced by two or more shell and tube heat exchangers arranged in series and/or in parallel that each employ a cold product stream as coolant for the synthesis gas feed stream. Where the shell and tube heat exchangers are employed in parallel, the synthesis gas feed stream is divided and a portion of the feed stream is sent to each heat exchanger and the cooled streams are subsequently recombined downstream of the heat exchangers.

Where there is a single cryogenic separation stage, the synthesis gas feed stream is cooled to below its dew point against an external refrigerant in a heat exchanger of the single separation stage that is operated at a temperature in the range of -53 to -48°C and a pressure in the range of 55 to 59 bar absolute so that the stream becomes two phase (a liquid phase comprising substantially liquid CO₂ and a vapour phase that is enriched in H₂ compared with the synthesis gas feed stream). The liquid phase is then separated from the vapour phase in a separator vessel of the single cryogenic separation stage and a liquid CO₂ stream and a hydrogen enriched synthesis gas vapour stream are removed from at or near the bottom and top of the separator vessel respectively. Where two or more cryogenic separation stages are arranged in series, the cryogenic separation stages will separate at least two liquid CO₂ streams from the hydrogen enriched synthesis gas vapour stream that is discharged from the final stage of the series. Thus, the synthesis gas feed stream is cooled to below its dew point against an external refrigerant in a heat exchanger of a first cryogenic separation stage of the cryogenic separation plant so that the stream becomes two phase. The liquid phase (substantially pure liquid CO₂) is then separated from the vapour phase in a separator vessel of the first cryogenic separation stage and a liquid CO₂ stream and a hydrogen enriched synthesis gas vapour stream are removed from at or near the bottom and top of the separator vessel respectively. The hydrogen enriched synthesis gas vapour stream is then further cooled to below its dew point against a further external refrigerant in a heat exchanger of the second stage of the cryogenic separation plant so that the stream becomes two phase and a liquid phase (substantially pure liquid CO₂) is then separated from a vapour phase (that is further enriched in hydrogen) in a separator vessel of the second stage. This may be repeated using further cryogenic separation stages until a sufficient level of CO₂ capture has been achieved. However, the final stage of the series should be operated at a temperature in the range of -53 to -48°C and a pressure in the range of 55 to 59 bar absolute. An advantage of removing a liquid CO₂ stream from each cryogenic separation stage of the series is that this reduces the refrigeration load for the subsequent cryogenic separation stage(s) of the series by minimizing sub-cooling of the liquid. Thus, the liquid CO₂ stream that is removed from the first and intermediate cryogenic separation stages of the series by-passes the subsequent separation stage(s) and is therefore not subjected to additional cooling.

Where there is a single cryogenic separation stage, ethane and/or ethylene is generally used as refrigerant thereby allowing cooling of the synthesis gas feed stream to a temperature in the range of -53 to -48°C.

Where there are two or more cryogenic separation stages arranged in series, propane may be used as refrigerant in one or more cryogenic separation stages followed by the use of ethane and/or ethylene as refrigerant in one or more further cryogenic separation stages, depending on the desired condensation temperatures in the different cryogenic separation stages. However, other refrigerants may be used such as ammonia, hydrochlorofluorocarbons (HCFC's) and mixed refrigerants. Typical mixed refrigerants comprises at least two refrigerants selected from the group consisting of butanes, propanes, ethane, and ethylene.

Where the cryogenic separation plant comprises a single cryogenic separation stage, the liquid CO₂ stream is passed to a pump that increases the pressure of the stream for transportation. Where the cryogenic separation plant comprises a plurality of cryogenic separation stages arranged in series, the liquid CO₂ streams that are withdrawn from the separation vessels of the cryogenic stages of the plant are combined before being passed to a pump that increases the pressure of the combined liquid CO₂ stream for transportation.

The H₂ enriched synthesis gas vapour stream that is discharged from the single cryogenic separation stage or from the last cryogenic separation stage (Stage N) of the series comprises between 75 and 90 mole% H₂ and between 10 and 25 mole% CO₂. This H₂ enriched synthesis gas vapour stream is at a high pressure (typically, approximately 59 barg) as the pressure drop across the cryogenic separation stages are ideally minimised . The hydrogen enriched synthesis gas vapour stream is then reduced in pressure before being passed to the inlet of the gas turbines (GTs) of the Power Island, preferably, using one or more turboexpanders. It will generally be necessary to warm the hydrogen enriched synthesis gas vapour stream before it enters the turboexpander(s) so as to mitigate the risk of a fall in temperature to below the temperature at which solid CO₂ would form in the turboexpander(s). Typically, the hydrogen enriched synthesis gas may be warmed by being passed through the multichannel heat exchanger before entering the turboexpander(s). The expansion energy recovered from the H₂ enriched synthesis gas vapour stream in the turboexpander(s) can be converted into electrical power for export or for use within the plant (e.g. to drive the CO₂ pumps or the compressor(s) of the external refrigeration circuit(s)). Isentropic expansion of the hydrogen enriched synthesis gas vapour stream in the turboexpander(s) results in cooling of the hydrogen enriched synthesis gas vapour stream. As discussed above, advantageously, the hydrogen enriched synthesis gas vapour stream(s) that exit the turboexpander(s) may be used to cool the synthesis gas feed stream in the multichannel heat exchanger or in two or more shell and tube heat exchanger(s).

The expanded hydrogen enriched synthesis gas vapour stream is then sent to a Fuel Gas Saturation and Dilution Stage (saturation tower) where the hydrogen enriched synthesis gas vapour stream is diluted with steam and/or optionally nitrogen thereby generating a fuel stream comprising approximately 50 mole % hydrogen. Dilution of the fuel stream may be required in order to control NOₓ emissions and flame speeds. However, the presence of CO₂ in the fuel stream may reduce or even eliminate the need for added diluent. The fuel stream is then sent to the Power Island, where the fuel is combusted in air in the combustor of at least one modified gas turbine (GT). The GT can be used to drive an electric motor thereby generating electricity. The exhaust gas from the gas turbine is passed to a Heat Recovery Steam Generator (HRSG) where the exhaust gas is heat exchanged with boiler feed water thereby generating steam and/or with steam to generate superheated steam. Typically, three levels of steam (HP, MP or LP) can be generated from boiler feed water. The resulting steam streams may be combined with the petroleum coke or coal that is fed to the gasifier and/or may be used in a steam turbine that drives an electric generator thereby producing additional electricity. The exhaust gas from the HRSG is vented to atmosphere.

Figure 2 shows a detailed process flow diagram for the cryogenic separation plant of the block diagram outlined in Figure 1. A synthesis gas feed stream 1 is fed at a pressure of 57 bar absolute to a cryogenic separation plant. The synthesis gas feed stream 1 comprises hydrogen (for example, 40 to 65 mole %, typically 55 mole %), carbon dioxide (for example, 35 to 60 mole %, typically 45 mole %), and contaminants such as water, inerts (for example nitrogen and/or argon), methane and carbon monoxide. Where the synthesis gas feed stream is obtained from a high pressure coal or petroleum coke gasifier, it may be a sour shifted synthesis gas stream comprising hydrogen sulfide (0.2 to 1.5 mole %, typically about 1 mole %). Where the shifted synthesis gas stream is derived from a reformer, hydrogen sulfide will have been removed from the feed to the reformer so as to avoid poisoning the reforming catalyst. Accordingly, the synthesis gas feed stream will not contain any hydrogen sulfide impurity.

Where the synthesis gas feed stream 1 is a sour synthesis gas stream, the synthesis gas feed stream may be sent on to an Absorption Tower (C-101), where the stream 1 is contacted with a solvent that acts as a selective absorbent for H₂S thereby generating a desulfurised synthesis gas stream 2. Suitable solvents that can act as selective absorbent for H₂S include physical solvents, for example, Selexol™ (a mixture of dimethyl ethers of polyethylene glycol) or chemical solvents, for example, methyldiethylamine (MDEA). However, the desulfurised synthesis gas stream 2 may still retain trace amounts of H₂S.

Optionally, the desulfurised synthesis gas stream 2 is then cooled in heat exchanger E-107 against propane refrigerant thereby generating a cold stream 2A. It is important that the cold stream 2A is maintained at a temperature above 0° in order to avoid the deposition of ice in the plant. The cooled synthesis gas stream 2A that exits heat exchanger E107 is then sent to drier D-500 in order to remove water prior to condensing out the CO₂ in a cryogenic separation plant. There are many methods known in the art for the removal of saturated water from a process stream including absorbent beds (for example, molecular sieve beds). The resulting dried synthesis gas stream 3 enters the cryogenic separation plant at an elevated pressure of 57 barg and at a temperature above 0°C. If the plant does not include optional heat exchanger E-107, the temperature of the dried synthesis gas stream is typically slightly above ambient, for example, 20 to 45°C. The dried synthesis gas stream is then cooled in multichannel heat exchanger EX-101, for example, a plate fin heat exchanger, against a plurality of cold process streams (see below) thereby generating a cooled synthesis gas feed stream 4 having a pressure of 56 bar absolute and a temperature of, for example, approximately -27°C. Accordingly, a portion of the CO₂ in the cooled synthesis gas feed stream that exits multichannel heat exchanger EX-101 will separate as a liquid phase from a vapour phase. Optionally, a separator vessel may be provided upstream of the first cryogenic separation stage to remove this condensed liquid phase.

The cooled shifted synthesis gas feed stream 4 then enters the first of a series of three cryogenic separation stages each of which comprises a heat exchanger and separator vessel. The separator vessels (V-102, V-103 and V-104) are operated at substantially the same pressure but at successively lower temperatures. In heat exchanger E-102 of the first cryogenic separation stage, the cooled synthesis feed stream 4 is further cooled to a temperature of -29.7°C against propane refrigerant to generate a two phase stream 5 which is then passed to separator vessel V-102 where a portion of the CO₂ in stream 5 separates as a liquid phase from a vapour phase. A vapour stream 6 that is enriched in hydrogen and depleted in CO₂ is removed overhead from separator vessel V-102 and is passed through heat exchanger E-103 where it is further cooled against propane or ethane refrigerant to a temperature of -40.8°C thereby generating a further two phase stream 8 which is passed to separator vessel V-103 where a portion of the CO₂ in stream 8 separates as a liquid phase from a vapour phase. A vapour stream 9 that is further enriched in hydrogen is withdrawn overhead from separator vessel V-103 and is passed through heat exchanger E-104 where this stream is further cooled to a temperature of -50°C against ethane refrigerant thereby generating a two phase stream 11 that is passed to separator vessel V-104 where a portion of the CO₂ in stream 11 separates as a liquid phase from a vapour phase. A hydrogen enriched synthesis gas stream 12 is discharged overhead from separator vessel V-104.

The propane refrigerant that is fed to the shell side of heat exchangers E-107, and E-102 and the ethane refrigerant that is fed to the shell side of heat exchangers E-103 and E-104 is at successively lower temperatures and may be obtained using any cryogenic method known to the person skilled in the art, including cryogenic methods for producing refrigerants for liquefying natural gas. The ethane refrigerant for heat exchangers E-103 and E-104 may be replaced with ethylene. In addition, the refrigerant for each of the heat exchangers E-107, and E-102 to E-104 may be replaced with a mixed refrigerant stream comprising at least two refrigerants selected from the group consisting of butanes, propanes, ethane and ethylene. The composition of the mixed refrigerant streams that are fed to the different heat exchangers may be adjusted to achieve the desired level of cooling.

Although the process of the invention has been described with respect to 3 cryogenic separation stages, the number of cryogenic separation stages may be increased or decreased depending predominantly on the different levels of refrigeration being used, the desired level of carbon capture, energy efficiency targets and the capital cost requirements. Preferably, at least 2 cryogenic separation stages are provided. There is a limit on the lowest temperature in the last stage of separation, as the temperature must be maintained above a value where solid CO₂ will form. This typically occurs at a temperature of -56°C (the triple point for pure CO₂ is at 5.18 bar and at a temperature of 56.4°C) although the presence of H₂S may depress this freezing point. Accordingly, the temperature of the last cryogenic separation stage should be above -55°C, preferably, -53 to -48°C. The pressure of the final cryogenic separation stage is maintained as high as possible in order to ensure the highest possible capture of CO₂. Typically, the pressure drop across the cryogenic separation stages of the plant is at least 1 bar, for example, 1 to 5 bar. Accordingly, the pressure of the final cryogenic separation stage may be up to 55 bar absolute.

The liquid CO₂ streams 7, 10 and 13 from the separation vessels V-102, V-103, and V-104 respectively are at substantially the same pressure and are mixed to generate a combined stream 14 that is sent to a separation vessel V-107. A liquid CO₂ stream 16 is withdrawn from the bottom of vessel V-107 and is sent to CO₂ pump P-101. The CO₂ pump P-101 increases the pressure of the CO₂ to the pipeline export pressure, of approximately 130 to 200 barg. The high pressure liquid CO₂ stream 17 is then passed through the multichannel heat exchanger E-101 1 before being passed to a further separator vessel V-101 1 where a liquid CO₂ stream 71 is withdrawn from at or near the bottom of vessel V-101 and is sent to pipeline

Any vapour leaving overhead from vessel V-107 is combined with stream 12 upstream of multichannel heat exchanger E-101 thereby generating stream 55. Stream 55 is then passed through multichannel heat exchanger E-101 where it is used to precool the dried synthesis gas feed stream 3. The hydrogen enriched synthesis gas stream 56 that exits the multichannel heat exchanger E-101 is combined with a hydrogen enriched vapour stream 67 that is withdrawn overhead from separator vessel V-101 thereby forming stream 68 which is optionally diluted with medium pressure steam to form diluted stream 69. Stream 69 is then passed through heat exchanger E-401 before being sent as a fuel gas stream 70 to a power plant (not shown). The purpose of heat exchanger E-401 is to raise the temperature of the diluted stream 69 to the desired feed temperature for the GTs of the power plant.

Figure 3 illustrates a modification to the cryogenic separation plant described in Figure 2. In Figure 3, the combined liquid CO₂ stream 66 that exits multichannel heat exchanger E-101 1 is passed to a rectification column T-101 for removal of residual hydrogen from the liquid CO₂ stream. The combined liquid CO₂ stream 66 is fed to an intermediate position in the column while a hydrogen enriched vapour stream 67 is withdrawn from at or near the top of the distillation column and a liquid CO₂ stream 71 having a reduced content of hydrogen is removed from at or near the bottom of the distillation column and is sent to a pipeline. Also, in Figure 3, the hydrogen enriched synthesis gas vapour stream 12 that is discharged overhead from separator vessel V-104 is passed through a channel of the multichannel heat exchanger E-101 where it is used to cool the dried synthesis gas feed stream 3. The hydrogen enriched synthesis gas vapour stream that exits the multichannel heat exchanger is at a pressure of about 55 barg and a temperature of about -10°C and is fed to turboexpander K-101 1 where it is expanded to the pressure of the hydrogen enriched synthesis gas vapour stream 15 that is withdrawn overhead from separator vessel V-107 thereby resulting in cooling of the stream. The expanded hydrogen enriched synthesis gas vapour stream exits the turboexpander K-101 at a pressure of about 42 bara and a temperature of about -30°C and is then passed through a further channel in the multichannel heat exchanger where it provides additional cooling for the dried synthesis gas feed stream 3. The expanded stream that exits the multichannel heat exchanger E-101 is then combined with stream 15 and the resulting combined stream is fed to turboexpander K-102 where it is expanded to a pressure of 32 bara and a temperature of - 30°C. The cooled stream that exits turboexpander K-102 is then passed through yet a further channel of the multichannel heat exchanger E-101 thereby providing additional cooling for the dried synthesis gas feed stream 3. The expanded hydrogen enriched synthesis gas vapour stream 56 that exits the multichannel heat exchanger is then combined with the hydrogen enriched synthesis gas vapour stream 67 that is withdrawn overhead from rectification column T-101 thereby forming stream 68.

The propane refrigerant, for use in the cryogenic condensation plants of Figures 2 and 3, is compressed in three stages by a centrifugal compressor K-301, as shown in Figure 4a. Propane vapour stream 301 from the compressor K-301 discharge is desuperheated in the air cooled Desuperheater E-301 and is then fully condensed in air cooled Condenser E-302. The liquefied propane 305 is collected in a horizontal propane receiver, V-301. A liquid propane stream is withdrawn from the bottom of V-301 and a first portion 306 of this liquid propane stream is routed to HP heat exchanger E-107 (upstream of drier D-500). A second portion 320 of this liquid propane stream is reduced in pressure across a valve and is fed to vessel V-302. A liquid propane stream is withdrawn from the bottom of vessel V-302 and is reduced in pressure across a further valve thereby forming stream 310 which is fed to vessel V-303. A liquid propane stream 334 that is withdrawn from the bottom of vessel V-303 is divided to form streams 334A and 349 that are routed to the heat exchanger (kettle) E-102 of the first cryogenic separation stage and the ethane refrigerant circuit condenser E-201A-D. The vapour stream 308 exiting the top of heat exchanger E-107 and the vapour stream 322 exiting the top of vessel V-302 are combined to form stream 308B which is routed to the propane compressor K-301 via propane compressor suction drum V-306 and line 311. The vapour stream exiting the top of vessel V-303 is routed to the propane compressor K-301 via propane compressor suction drum V-305 and the propane vapour exiting the top of heat exchanger E-102 and ethane refrigerant circuit condenser E-201A-D is routed to the propane compressor K-301 via propane compressor suction drum V-304. Propane compressor suction drums V-306, V-305 and C304 are at successively lower pressures.

The Ethane refrigerant in the CO₂ Condensation Circuit is compressed in two stages by centrifugal compressors K-201 and K-202 that operate on a common shaft, as shown in Figure 4b. Ethane vapour streams 210 and 216 from the discharge of the compressors are combined to form stream 201 that is fully condensed against propane refrigerant in Ethane Condenser E-201A-D. The liquefied ethane stream 204 exiting E-201 is then collected in a horizontal ethane receiver, V-201. The discharge pressure of the compressors is governed by the condensing pressure at the exit of the Ethane Condenser E-201A-D.

The condensed ethane liquid (stream 205) is routed to the heat exchangers (kettles) E-103 and E-104 of the second and third cryogenic separation stages in the HP and LP ethane circuit loops respectively. For the HP ethane circuit loop, ethane flow to kettle E-103 (stream 207) is controlled by means of an inlet level control valve. The vapour stream 208 exiting the E-103 kettle is routed to the HP Ethane compressor K-201 via the HP ethane suction drum V-202 and line 209. For the LP ethane circuit loop, ethane flow is via an Ethane Economiser E-202 to the E-104 kettle, again controlled by means of a kettle inlet level control valve. The vapour stream 213A exiting the E-104 kettle is routed to the LP Ethane compressor K-202 via the Ethane Economiser E-202, to recover the cooling duty, and a LP ethane suction drum V-203.

## Claims

1. A process for removing carbon dioxide from a synthesis gas feed stream in a cryogenic separation plant that comprises either a single cryogenic separation stage or at least two cryogenic separation stages arranged in series, with the stages in the series being designated stage 1 through stage N, the letter N representing the number of stages in the series, the single stage or each stage of the series comprising the steps of (a) condensing carbon dioxide from the synthesis gas by cooling the synthesis gas by non-contact heat exchange with an external refrigerant to produce liquefied carbon dioxide, and (b) separating the liquefied carbon dioxide from the synthesis gas, with the single separation stage discharging a liquefied carbon dioxide product stream and a hydrogen enriched synthesis gas stream or, with each of the stages in the series cooling the synthesis gas to a successively lower temperature as the synthesis gas progresses from stage 1 to stage N, thereby separately removing a liquefied carbon dioxide product stream from each of the stages, with stage N discharging a hydrogen enriched synthesis gas vapour stream, **characterized in that:**
(i) the synthesis gas feed stream comprises 40 to 65 mole % hydrogen and is fed to the single stage or the first stage of the series at a pressure in the range of 46 to 76 bar absolute;
(ii) the single stage or stage N of the series is operated at a temperature in the range of -53 to -48°C and a pressure in the range of 44 to 74 bar absolute such that the single stage or the combined stages of the series remove 70 to 80% of the total moles of carbon dioxide in the synthesis gas feed stream; and
(iii) the liquefied CO₂ product stream(s) discharged from the stage(s) of the cryogenic separation plant is sequestrated and/or used in a chemical process.

2. A process as claimed in Claim 1 wherein the liquid CO₂ product stream(s) is used for enhanced oil recovery before being sequestered.

3. A process as claimed in Claims 1 or 2 wherein 75 to 80% of the total moles of carbon dioxide in the synthesis gas feed stream is separated in the cryogenic separation plant.

4. A process as claimed in any one of the preceding claims wherein the synthesis gas stream comprises hydrogen, carbon dioxide, and hydrogen sulfide and the hydrogen sulfide is condensed from the synthesis gas stream in the single cryogenic separation stage or each of the cryogenic separation stages of the series and the hydrogen sulfide is removed from the single stage or each of the stages of the series in the liquefied carbon dioxide product stream(s).

5. A process as claimed in Claim 4 wherein the single stage or the combined stages of the series remove 80 to 90% of the total moles of hydrogen sulfide from the synthesis gas feed stream.

6. A process as claimed in any one of the preceding claims wherein the synthesis gas feed stream is cooled upstream of the cryogenic separation plant to a temperature in the range of 20 to 50°C thereby condensing out a condensate and the condensate is separated from the cooled synthesis gas stream.

7. A process as claimed in Claim 6 wherein the synthesis gas feed stream is dried prior to being passed to the CO₂ condensation plant such that the synthesis gas feed stream has a water content of less than 1 ppm on a molar basis.

8. A process as claimed in any one of the preceding claims wherein the synthesis gas feed stream is passed to a pre-cooling heat exchanger of the CO₂ condensation plant where the synthesis gas feed stream is pre-cooled against a cold process stream selected from a liquid CO₂ product stream and a cold H₂ enriched synthesis gas vapour stream.

9. A process as claimed in Claim 8 wherein the synthesis gas feed stream is pre-cooled in a multichannel heat exchanger by passing the synthesis gas feed stream through at least one channel of the multichannel heat exchanger and a plurality of cold process streams through further channels of the multichannel heat exchanger.

10. A process as claimed in any one of the preceding claims wherein the pressure drop across the single stage or the series of stages of the cryogenic separation plant is in the range of 2 to 10 bar.

11. A process as claimed in any one of the preceding claims wherein the hydrogen enriched synthesis gas vapour stream that exits the separator of the single cryogenic separation stage or that exits stage N of the series of cryogenic separation stages is passed through a channel of the multichannel heat exchanger in heat exchanger relationship with the synthesis gas feed stream and is then cooled by expansion to lower pressure in a first turboexpander before being fed to a further channel in the multichannel heat exchanger and the hydrogen enriched vapour stream is optionally cooled by expansion to a lower pressure in a second turboexpander before being fed to a further channel of the multichannel heat exchanger thereby pre-cooling the synthesis gas feed stream to a temperature in the range of -15 to -35°C.

12. A process as claimed in Claim 11 wherein the hydrogen enriched synthesis vapour stream discharged from the single cryogenic separation stage or the final cryogenic separation stage (Stage N) of the cryogenic separation plant comprises at least 70 mole % hydrogen, preferably, at least 80 mole % hydrogen and the expanded hydrogen enriched vapour stream is used as a fuel stream for the combustor of a gas turbine that drives an electric generator thereby producing electricity provided that the hydrogen enriched vapour stream is not expanded to a pressure below the desired fuel gas feed pressure for the combustor.

13. A process as claimed in any one of the preceding claims wherein the liquid CO₂ stream that is removed from the single cryogenic separation stage or the combined liquid CO₂ stream that is removed from the series of cryogenic separation stages comprises at least 90 mole% CO₂, in particular, at least about 94 mole % CO₂, the liquid CO2 stream or combined liquid CO2 stream is fed to a rectification column and a liquid CO2 product stream comprising less than 1% by volume hydrogen is removed from at or near the bottom of the rectification column.

14. A process as claimed in any one of the preceding claims wherein the liquefied CO₂ product stream is transferred by pipeline to a reception facility of an oil field or gas field where the CO2 product stream is injected into a reservoir of the oil field or gas fluid.
